(19) Europäisches Patentamt
European Patent Office
Office européen des brevets

(11) Veröffentlichungsnummer: **0 114 785**
**B1**

(12) # EUROPÄISCHE PATENTSCHRIFT

(45) Veröffentlichungstag der Patentschrift: **03.09.86**

(21) Anmeldenummer: **84810026.9**

(22) Anmeldetag: **16.01.84**

(51) Int. Cl.⁴: **C 08 G 79/04**, C 07 F 9/145, C 08 K 5/53, C 08 L 101/00 // (C08L101/00, 85:02)

(54) **Polymere, sterisch gehinderte Phosphonatstabilisatoren.**

(30) Priorität: **21.01.83 US 459844**

(43) Veröffentlichungstag der Anmeldung: **01.08.84 Patentblatt 84/31**

(45) Bekanntmachung des Hinweises auf die Patenterteilung: **03.09.86 Patentblatt 86/36**

(84) Benannte Vertragsstaaten: **BE DE FR GB IT NL**

(56) Entgegenhaltungen:
**FR-A-1 205 211**
**FR-A-2 359 845**
**US-A-4 044 074**
**US-A-4 178 283**

(73) Patentinhaber: **CIBA- GEIGY AG, Klybeckstrasse 141, CH- 4002 Basel (CH)**

(72) Erfinder: **Spivack, John D., 1 Blue Jay Street, Spring Valley 10977 (US)**
Erfinder: **Pastor, Stephen D., 112 Union Road, Spring Valley 10977 (US)**

**EP 0 114 785 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Organische polymere Materialien wie Kunststoffe und Harze unterliegen thermischem, oxydativem und Licht-Abbau. Die verschiedensten Stabilisatoren zur Stabilisierung einer Reihe von Substraten sind aus dem Stand der Technik bekannt. Deren Wirksamkeit schwankt je nach den Ursachen des Abbaus und dem stabilisierten Substrat. Im allgemeinen ist es schwierig vorauszusagen, welcher Stabilisator für ein gegebenes Anwendungsgebiet am wirksamsten und wirtschaftlichsten wäre. Beispielsweise kann die Wirksamkeit des Stabilisators zur Verringerung der Flüchtigkeit davon abhängen, dass die Spaltung von Bindungen im Substratmolekül verhindert wird. Die Begrenzung der Versprödung und die Beibehaltung der Elastizität in einem Polymer oder Kautschuk kann es erforderlich machen, übermässige Vernetzung und/oder Kettenspaltung zu verhindern. Zum Ausschluss von Verfärbung müssen Reaktionen verhindert werden, die neue Chromophore oder Farbkörper im Substrat oder dem Stabilisator liefern. Probleme bezüglich Verarbeitungsstabilität und Unverträglichkeit sind ebenfalls in Betracht zu ziehen.

Es wurde nun gefunden, dass die erfindungsgemässen Phosphonatderivate eine ungewöhnliche Kombination wünschenswerter Eigenschaften besitzen, wodurch sie besonders wirksam und nützlich als Stabilisatoren werden. Die Verbindungen sind insbesondere wirksam beim Schutz von Polyolefinen, Polyvinylchlorid, Polyestern, schlagfestem Polystyrol, Kautschuktypen wie Polybutadien und Styrol/Butadienkautschuk sowie weiteren Polymeren, wo die Hemmung der Vernetzung, Trübung, Verfärbung, Geruchsbildung und des Ausschwitzens grundlegende Erfordernisse darstellt.

Aus den US-Patentschriften 4 044 074 und 4 178 283 und der französischen Patentschrift 1 205 211 sind polymere organische Phosphorverbindungen bekannt, die sich für die Flammfestausrüstung eignen. In der französischen Patentschrift 2 359 845 werden sterisch gehinderte Phosphite und ihre Verwendung als Stabilisatoren für organisches Material beschrieben. Im Unterschied zu den erfindungsgemäßen Verbindungen handelt es sich allerdings um Monomere, außerdem trägt das Phosphoratom einen anderen Substituenten.

Die Hauptaufgabe dieser Erfindung besteht darin, eine weitere Klasse polymerer Phosphonate zur Verfügung zu stellen, die einen weiten Bereich verbesserter Leistungsdaten bei der Stabilisierung aufweisen.

Weitere Aufgaben und Vorteile dieser Erfindung sind aus deren nachfolgender Beschreibung ersichtlich.

Die erfindungsgemässen polymeren Phosphonate enthalten wiederkehrende Struktureinheiten der Formel

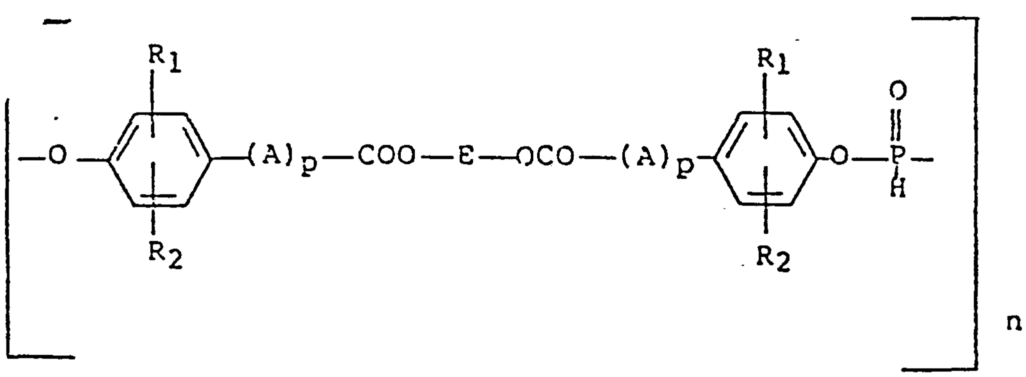

worin $R_1$ und $R_2$ unabhängig voneinander Alkyl mit 4 bis 12 Kohlenstoffatomen, Cycloalkyl mit 5 bis 6 Kohlenstoffatomen, Aralkyl mit 7 bis 15 Kohlenstoffatomen oder Alkaryl mit 7 bis 15 Kohlenstoffatomen, A Alkylen mit 1 bis 4 Kohlenstoffatomen, E Alkylen mit 2 bis 12 Kohlenstoffatomen, gegebenenfalls durch eine oder zwei Alkylgruppen mit 1 bis 9 Kohlenstoffatomen substituiertes Phenylen, eine Gruppe $-T(OT)_t-$, in der T für Aethylen, Propylen oder 1,4-Butylen steht und t 1 bis 10 ist, oder eine Gruppe -G-X-G-, in der G für Alkylen mit 2 bis 4 Kohlenstoffatomen und X für Schwefel oder -N(R)- stehen, wobei R Wasserstoff oder Alkyl mit 1 bis 8 Kohlenstoffatomen darstellt, bedeuten und p O oder 1 sowie n 2 bis 50 sind.

Solche Verbindungen der obigen Konstitution sind besonders bevorzugt, worin sich $R_1$ und $R_2$ beide jeweils in der meta-Stellung zur A-Gruppe in den Phenylringen befinden.

Die $R_1$- und $R_2$-Gruppen sind vorzugsweise geradkettiges oder verzweigtes Alkyl mit 4 bis 8 Kohlenstoffatomen, wie n-Butyl, sek.-Butyl., tert.-Butyl, tert.-Pentyl, 2-Aethyl-hexyl, n-Octyl und 1,1,3,3-Tetramethylbutyl. Die Gruppen tert.-Butyl, tert.-Pentyl und 1,1,3,3-Tetramethylbutyl sind dabei besonders bevorzugt. R ist vorzugsweise Alkyl mit 1 bis 4 Kohlenstoffatomen. Zu Aralkyl gehört Benzyl, und Alkaryl umfasst Tolyl, Mesityl und Xylyl.

Die Gruppe A ist vorzugsweise eine direkte Bindung (d.h. p ist 0) oder Alkylen mit 1 bis 2 Kohlenstoffatomen wie Aethylen.

E steht vorzugsweise für Hexamethylen, 2,2-Dimethyl-1,3-propandiyl oder Neopentylen, Thiodiäthylen und Poly(oxyäthylen) mit 4 bis 40 Kohlenstoffatomen oder für $-T(OT)_t-$, wobei T Aethylen und t 1 bis 10 ist.

Die erfindungsgemässen Phosphonate lassen sich dadurch herstellen, dass man das entsprechend

substituierte Bis-phenol

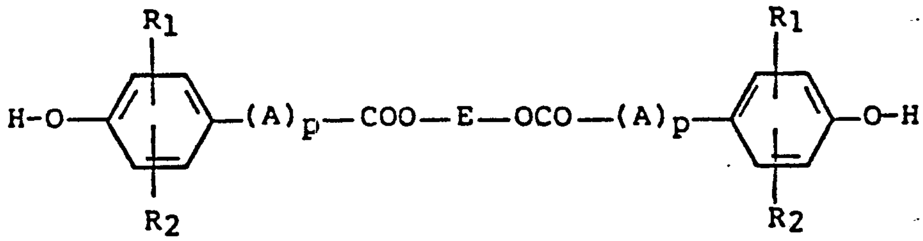

worin $R_1$, $R_2$, A, E und p die oben angegebenen Bedeutungen haben, mit Phosphortrichlorid in entsprechenden Konzentrationen, gegebenenfalls in einem Lösungsmittelsystem, zum erfindungsgemäßen polymeren Produkt umsetzt. Das Lösungsmittelsystem ist vorzugsweise aromatisch, wie Benzol, Toluol, und Xylol, oder ein heterocyclischer Aether wie Tetrahydrofuran, gegebenenfalls in Gegenwart eines aliphatischen Mitlösungsmittels wie Heptan und Hexan. Die Reaktionstemperatur liegt im Bereich von -5°C bis zur Rückflusstemperatur des Reaktionsmediums. Bei der bevorzugten Methode zur Herstellung der erfindungsgemässen Polymeren führt man die Reaktion in Gegenwart eines Protonenakzeptors wie eines tertiären Amins, beispielsweise Triäthylamin oder Pyridin, oder eines Metallhydrids wie Natriumhydrid durch.

Die zur Herstellung dieser polymeren Phosphonate erforderlichen Phenolausgangsstoffe sind handelsüblich oder nach bekannten Methoden herstellbar. Bei einer typischen Herstellungsmethode handelt es sich um die Umesterung eines Niederalkylesters einer sterisch gehinderten Phenolcarbonsäure mit dem entsprechenden Glykol.

Zu bevorzugten Bis-phenolen zählen Hexamethylen-bis-(3,5-di-tert.-butyl-4-hydroxybenzoat), Hexamethylen-bis-(3,5-di-tert.-butyl-4-hydroxyhydrocinnamat), 2,2-Dimethyl-1,3-propandiyl-bis-(3,5-di-tert.-butyl-4-hydroxy-hydrocinnamat) und Thiodiäthylen-bis-(3,5-di-tert.-butyl-4-hydroxy-hydrocinnamat).

Die erfindungsgemässen Polymeren sind bei der Stabilisierung organischer Materialien wie Kunststoffe, Polymere und Harze wirksam. Die Polymeren sind besonders als Stabilisatoren zum Schutz von Polyolefinen, zum Beispiel Polyäthylen, Polypropylen, Polyisobutylen, Poly-(buten-1), Poly-(penten-1), Poly-(3-methylbuten-1), Poly-(4-methyl-penten-1) und verschiedenen Aethylen/Propylencopolymeren nützlich.

Weitere Substrate, bei denen sich die erfindungsgemässen Polymeren besonders bewähren, sind Polyvinylchlorid, Polystyrol, einschliesslich schlagfestem Polystyrol, ABS-Harz, SBR, Polyisopren sowie Naturkautschuk, Polyester einschliesslich Polyäthylenterephthalat und Polybutylenterephthalat einschliesslich von Copolymeren, Polyurethane, Polycarbonate, Polyamide wie Nylon-6 und -6/6 sowie Copolyamide und Polysulfone.

Im allgemeinen umfassen die zu stabilisierenden Substrate:

1. Polymere von Mono- und Diolefinen, beispielsweise Polyethylen (das gegebenenfalls vernetzt sein kann), Polypropylen, Polyisobutylen, Polybuten-1, Polymethylpenten-1 Polyisopren oder Polybutadien, sowie Polymerisate von Cycloolefinen, z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, beispielsweise Ethylen-Propylen-Copolymere Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Aethylidennorbornen.

4. Polystyrol, Poly-(p-methylstyrol).

5. Copolymere von Styrol oder α-Methylstyrol mit Dienen oder Acrylderivaten, bespielsweise Styrol-Butadien, Styrol-Acrylnitril, Styrol-Alkylmethacrylat, Styrol-Maleinanhydrid, Styrol-Acrylnitril-Methylecrylat; Mischungen von hoher Schlagzähigkeit aus Styrol-Copolymeren und einem anderen Polymer, z.B. einem Polyacrylat, einem Dien-Polymeren oder einem Ethylen-Propylen-Dien-Terpolymeren; sowie Block-Copolymere des Styrols, z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, beispielsweise Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS, MBS, ASA oder AES-Polymere bekannt sind.

7. Halogenhaltige Polymere, beispielsweise Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α, β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, z.B. Ethylenoxid, enthalten.

13. Polyphenyloxide und -sulfide und deren Mischungen mit Styrolpolymeren.

14. Polyurethane die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylenisophthalamid, sowie deren Block-Copolymere mit Polyethern, z.B. Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trockende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, z.B. von Epoxyacrylaten, Urethan-acrylaten oder Polyester-acrylaten.

24. Alkyldharze, Polyesterharze und Acrylatharze, die mit Melaminharzen, Harnstoffharzen, Polyisocyanaten, oder Epoxidharzen vernetzt sind.

25. Vernetzte Epoxidharze, die sich von Polyepoxiden ableiten, z.B. von Bis-glycidyläthern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren, beispielsweise PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellithate), sowie Abmischungen synthetischer Ester mit Mineralölen in beliebigen Gewichtsverhältnissen, wie sie z.B. als Spinnpräparationen Anwendung finden, sowie deren wässrigen Emulsionen.

29. Wässrige Emulsionen natürlicher oder synthetischer Kautschuke, beispielsweise Naturkautschuk-Latex oder Latices von carboxylierten Styrol-Butadien-Copolymeren.

Im allgemeinen werden die erfindungsgemässen Stabilisatoren in Mengen von etwa 0,01 bis etwa 5 Gew.-%, bezogen auf die stabilisierte Zusammensetzung, eingesetzt, doch schwankt dies je nach dem jeweiligen Substrat und dem Anwendungszweck. Ein vorteilhafter Bereich liegt bei etwa 0,05 bis etwa 2% und insbesondere 0,1 bis etwa 1%.

Die erfindungsgemässen Stabilisatoren lassen sich leicht nach herkömmlichen Methoden in irgendeiner zweckmässigen Stufe vor der Herstellung von Formkörpern darsus in die organischen Polymeren einarbeiten. Beispielsweise kann men den Stabilisator mit dem Polymer in trockener pulverform vermischen, oder eine

Suspension oder Emulsion des Stabilisetors kann mit einer Lösung, Suspension oder Emulsion des Polymeren vermischt werden. Gegebenenfalls können die erfindungsgemässen stabilisierten Polymerzusammensetzungen ferner verschiedene übliche Zusätze enthalten, wie die folgenden:

**1. Antioxidantien**

1.1. Alkylierte Monophenole
2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. Alkylierte Hydrochinone
2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. Hydroxylierte Thiodiphenylether
2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole
2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2'2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methlyen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercapto-butan
Ethylenglycol-bis-[3,3-bis-(3'-tert.butyl-4'-hydroxyphenyl) - butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5 Benzylverbindungen
1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-Phosphonsäure-dioctadecylester
3,5-Di-tert.butyl-4-hydroxybenzyl-phosphonsäure-monoethylester, Calcium-salz.

1.6. Acylaminophenole
4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der β-(3,5-Di-tert.butyl-4-hydroxyphenyl)-propionsäure
mit ein oder mehrwertigen Alkoholen, beispielsweise

Methanol Diethylenglycol
Octadecanol Triethylenglycol
1,6-Hexandiol Pentaerythrit
Neopentylglycol Tris-hydroxyethyl-isocyanurat
Thiodiethylenglycol Di-hydroxyethyl-oxalsäurediamid
1.8. Ester der β(5-tert.butyl-4-hydroxy-3-methylphenyl)-propionsäure
mit ein- oder mehrwertigen Alkoholen, beispielsweise
Methanol Diethylenglycol
Octadecanol Triethylenglycol
1,6-Hexandiol Pentaerythrit
Neopentylglycol Tris-hydroxyethyl-isocyanurat
Thiodiethylenglycol Di-hydroxyethyl-oxalsäurediamid
1.9. Amide der β-(3,5-Di-tert.butyl-4-hydroxyphenyl)-propionsäure, beispielsweise
N,N'-Di-(3,5-di-tert.butyl-4-hydroxyphenylpropionyl)-hexamethylendiamin
N,N'-Di-(3 5-di-tert.butyl-4-hydroxyphenylpropionyl)-trimethylendiamin
N,N'-Di-(3,5-di-tert.butyl-4-hydroxyphenylpropionyl)-hydrazin

**2. UV-Absorber und Lichtschutzmittel**

2.1. 2-(2'-Hydroxyphenyl)-benztriazole, beispielsweise das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, beispielsweise 4-Hydroxy-, 4-Methoxy-4, -Octoxy-, 4-Decyloxy-, 4-Dodecyloxy-, 4-Benzyloxy-, 4,2',4'-Tri-hydroxy-, 2'-Hydroxy-4,4'-dimethoxy-Derivat.

2.3. Ester von gegebenenfalls substituierten Benzoesäuren, beispielsweise 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, beispielsweise α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin,

2.5. Nickelverbindungen, beispielsweise Nickelkomplexe des 2,2'-Thio-bis-[ 4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze won 4-Hydroxy-3,5-di-tert.butylbenzyl-phosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, beispielsweise Bis-(2,2,6,6-tetramethyl-piperidyl)-sebacat Bis-(1,2,2,6,6-pentamethylpiperidyl)-sebacat n-Butyl-3,5-di-tert.butyl-4-hydroxybenzyl-malonsäure-bis(1,2,2,6,6-pentamethylpiperidyl)-ester, Kondensationsprodukt aus 1-Hydroxy-ethyl-2,2,6,6-Tetramethyl-4-hydroxypiperidin und Bernsteinsäure, Kondensationsprodukt aus N,N'-(2,2,6,6-Tetramethylpiperidyl)-hexamethylendiamin und 4-tert.octylamino-2,6-dichlor-1,3,5-s-triazin, Tris-(2,2,6,6-tetramethylpiperidyl)-nitrilotriacetat, Tetrakis-(2,2,6,6-tetramethyl-4-piperidyl)-1,2,3,4-butantetracarbonsäure, 1,1'-(1,2-ethandiyl)-bis-(3,3,5,5-tetramethyl-piperazinon).

2.7. Oxalsäurediamide, beispielsweise 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von ortho- und para-Methoxy- sowie von o- und p-Ethoxy-di-substituierte Oxaniliden.

**3. Metalldesaktivatoren,**

beispielsweise N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzylidenoxalsäuredihydrazid.

**4. Phosphite und Phosphonite,**

beispielsweise Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-disphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit.

**5. Peroxidzerstörende Verbindungen,**

beispielsweise Ester der β-Thio-dipropionsäure, beispielsweise der Lauryl-, Stearyl-, Myristyl- oder Tridecylester, Mercaptobenzimidazol, das Zinksalz des 2-Mercapto-benzimidazols, Zink-dibutyl-dithiocarbamat, Dioctadecyldisulfid, Pentaerythrit-tetrakis-(β-dodecylmercapto)-propionat.

**6. Polyamidstabilisatoren,**

beispielsweise Kupfersalze in Kombination mit Jodiden und/oder Phosphorverbindungen und Salze des zweiwertigen Mangans.

**7. Basische Co-Stabilisatoren,**

beispielsweise Melamin Polyvinylpyrrolidon, Dicyandiamid, Triallylcyanurat, Harnstoff-Derivate Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

**8. Nukleierungsmittel,**

beispielsweise 4-tert.Butylbenzoesäure, Adipinsäure, Diphenylessigsäure.

**9. Füllstoffe und Verstärkungsmittel,**

beispielsweise Calciumcarbonat, Silikate, Glasfasern, Asbest, Talk, Kaolin, Glimmer, Bariumsulfat, Metalloxide und -hydroxide, Russ, Graphit.

**10. Sonstige Zusätze,**

beispielsweise Weichmacher, Gleitmittel, Emulgatoren, Pigmente, optische Aufheller, Flammschutzmittel, Antistatika, Treibmittel.

Die erfindungsgemässen Verbindungen können für sich als einziger Stabilisator entweder mit hauptsächlich einer Antioxydansfunktion oder einer Lichtschutzfunktion eingesetzt werden, oder der Stabilisator kann die Wirkung als Antioxydans und als Lichtschutzmittel in sich vereinigen. Die Stabilisatoren lassen sich zusammen mit phenolischen Antioxydantien, Gleitmitteln wie Calciumstearat, Pigmenten, Farbmitteln oder Farbstoffen, UV-Absorbern, Lichtschutzmitteln wie sterisch gehinderten Aminen, Metalldesaktivatoren, Talkum und sonstigen Füllstoffen verwenden.

Die vorliegenden Verbindungen lassen sich zwar zweckmässig als Stabilisatoren für verschiedene Substrate sowohl für sich als auch in Verbindung mit weiteren Zusatzstoffen verwenden, doch ergibt die Kombination der vorliegenden Verbindungen mit ausgewählten sterisch gehinderten phenolischen Antioxydantien einen erhöhten Schutz solcher Substrate. Dabei haben sich aus der folgenden Gruppe ausgewählte phenolische Antioxydantien als besonders geeignet erwiesen: 2,6-Di-tert.-butyl-4-methylphenol, 4,4'-Thio-bis-(6-tert.-butyl-3-methylphenol), 2,2'-Methylen-bis-(6-tert.-butyl-3-methyl-phenol), 4,4'-Methylen-bis-(2,6-di-tert.-butylphenol), 1,1 3-Tris-(5-tert.-butyl-4-hydroxy-2-methylphenyl)-butan, 1,3,5-Tris-(3,5-di-tert.-butyl-4-hydroxybenzyl)-2,4,6-trimethylbenzol, 2-Octylthio-4,6-bis-(3,5-di-tert.-butyl-4-hydroxyanilino)-s-triazin, n-Octadecyl-3,5-di-tert.-butyl-4-hydroxyhydrocinnamat, Neopentantetrayl-tetrakis-(3,5-di-tert.-butyl-4-hydroxyhydrocinnamat), 1,3,5-Tris-(3,5-di-tert.-butyl-4-hydroxybenzyl)-isocyanurat, Thiodi-äthylen-bis-(3,5-di-tert.-butyl-4-hydroxy-hydrocinnamat),der Tris-(2-hydroxyäthyl)-isocyanuratester der β -(3,5-Di-tert.-butyl-4-hydroxyphenyl)-propionsäure, 6,6'-Aethyliden-bis-(2,4-di-tert.-butylphenol), 6,6'-Methylen-bis-(2,4-di-tert.-butyl-phenol) und 1,3,5-Tris-(4-tert.-butyl-3-hydroxy-2,6-dimethylbenzyl)-isocyanurat.

Die Zusammensetzungen bestehen aus (a) einem Substrat, vorzugsweise einem Polyolefin wie Polypropylen,

(b) etwa 0.01 bis etwa 5 Gew.-% der Zusammensetzung, vorzugsweise etwa 0,025 bis etwa 2% und besonders bevorzugt 0,025 bis 1%, einer erfindungsgemäßen Verbindung oder einem Gemisch solcher sowie gegebenenfalls (c) einem phenolischen Antioxydans oder einem Gemisch solcher aus der eben erwähnten Gruppe ausgewählter Antioxydantien, ebenfalls im Bereich von 0,01 bis 5% und vorzugsweise 0,05 bis 1 Gew.-% der Zusammensetzung.

Ebenso sind die folgenden Lichtschutzmittel zur Anwendung, entweder für sich oder zusammen mit den angeführten phenolischen Antioxydantien, als Zusatzstoffe zur Einarbeitung mit den vorliegenden Stabilisatoren in die genannten Substrate bevorzugt: 2-(2'-Hydroxy-5'-methylphenyl)-benztriazol, 2-(3',5'-Di-tert.-butyl-2'-hydroxyphenyl)-benztriazol, 2-(2'-Hydroxy-3',5'-di-tert.-amylphenyl)-benztriazol, Nickel-bis-[O-äthyl-(3,5-di-tert.-butyl-4-hydroxybenzyl)]-phosphonat, Bis-(1,2,2,6,6-pentamethyl-4-piperidyl)-2-n-butyl-2-(3,5-di-tert.-butyl-4-hydroxybenzyl)-malonat, Bis-(2,2,6,6-tetramethyl-4-piperidyl)-sebacinat, das Bernsteinsäuredimethylesterpolymer mit 4-Hydroxy-2,2,6,6-tetramethyl-1-piperidinäthanol und das Polymer des 2,4-Dichlor-6-octylamino-s-triazins mit N'-(2,2,6,6-Tetramethyl-4-piperidyl)-hexamethylendiamin.

Die nachfolgenden Beispiele dienen der näheren Erläuterung der Erfindung. Dabei sind Teile stets Gewichtsteile, falls nicht anders angegeben.

**Beispiel 1**

Poly-[hexamethylen-bis-(4-(3,5-di-tert.-butyl)-benzoat)-phosphonat]

Man gibt eine Lösung von 2,74 g Phosphortrichlorid und 4,29 g Triäthylamin in 200 ml Toluol in einen Kolben unter einer Stickstoffatmosphäre und setzt eine Lösung von 11,64 g Hexamethylen-bis-(3,5-di-tert.-butyl-4-hydroxybenzoat) in 100 ml Toluol bei 10°C dazu. Man rührt 48 stunden bei Raumtemperatur, versetzt mit 0,18 g Wasser und 0,87 g Pyridin, erhitzt 24 stunden auf 50°C und filtriert zur Entfernung des Aminhydrochlorids. Anschliessend wird Flüchtiges im Vakuum entfernt. Der Rückstand wird durch trockene säulenchromatographie gereinigt, was einen weissen Feststoff vom Schmelzpunkt 76-89°C ergibt. IR: (1% in Chloroform) 1475 $cm^{-1}$ (P-H).

Analyse: Berechnet für $[C_{36}H_{53}O_7P]_n$: C, 68,6; H, 8,50; P, 4,93.

Gefunden: C, 69,52; H, 8,70; P, 4,05.

Gelpermeationschromatographische Analyse: n = 2-4.

**Beispiel 2**

Poly-[hexamethylen-bis-(4-(3,5-di-tert.-butyl)-benzoat)-phosphonat]

Ein Copolymer niedrigeren Molekulargewichts wird gemäss Beispiel 1 unter Verwendung von 1,37 g Phosphortrichlorid, 2,12 g Triäthylamin, 11,66 g Hexamethylen-bis-(3,5-di-tert.-butyl-4-hydroxybenzoat), 0,79 g Pyridin und 0,18 g Wasser hergestellt. Der Rückstand wird durch trockene Säulenchromatographie gereinigt, was einen weissen Feststoff vom Schmelzpunkt 68-78°C ergibt. IR: (1% in Chloroform) 1475 $cm^{-1}$ (P-H).

Analyse: Berechnet für $[C_{36}H_{53}O_7P]_n$: C, 68,76; H, 8,50; P 4,93.

Gefunden: C, 70,60; H, 9,01; P, 3,38.

Gelpermeationschromatographische Analyse: n = 2-3.

**Beispiel 3**

Poly-[hexamethylen-bis-(4-(3,5-di-tert.-butyl)-benzoat)-phosphonat]

Dieses Beispiel erläutert die Herstellung eines Copolymers höheren Molekulargewichts.

Man gibt eine Lösung von 29,1 g Hexamethylen-bis-(3,5-di-tert.-butyl-4-hydroxybenzoat) in 300 ml Tetrahydrofuran in einen Kolben unter Stickstoff und setzt eine Suspension von 2,4 g Natriumhydrid in 100 ml Tetrahydrofuran dazu. Man erhitzt 2 Stunden auf 60°C, kühlt auf 5°C ab und versetzt die entstandene weisse Suspension langsam mit 6,87 g Phosphortrichlorid. Man rührt 24 Stunden bei Raumtemperatur, kühlt auf 15°c ab, versetzt mit 1,8 g Wasser und 4,0 g Pyridin und rührt 24 Stunden bei Raumtemperatur. Dann filtriert man das Reaktionsgemisch, entfernt das Lösungsmittel im Vakuum und reinigt den Rückstand durch trockene Säulenchromatographie, was einen weissen Feststoff vom Schmelzpunkt 95-110°C ergibt. IR: (1% in Chloroform) 2450 $cm^{-1}$ (P-H).

Analyse: Berechnet für $[c_{36}H_{53}O_7P]_n$: C, 68,76; H, 8,50; P, 4,93.

Gefunden: C, 68,81; H, 8,49; P, 4,15.

Gelpermeationschromatographische Analyse: n = 3-5.

**Beispiel 4**

Poly-[hexamethylen-bis-(4-(3,5-di-tert.-butyl)-hydrocinnamat)-phosphonat]

Man wiederholt die Arbeitsweise nach Beispiel 3 unter Verwendung von 15,97 g Hexamethylen-bis-(3,5-di-tert.-butyl-4-hydroxyhydrocinnamat), 1,2 g Natriumhydrid, 1,72 g Phosphortrichlorid, 1,8 g Wasser und 0,99 g Pyridin. Der Rückstand wird durch trockene Säulenchromatographie gereinigt, was einen weissen Feststoff vom Schmelzpunkt 45-49° C ergibt. IR: (1% in Tetrachlorkohlenstoff) 2450 $cm^{-1}$ (P-H).

Analyse: Berechnet für $[C_{40}H_{61}O_7P]_n$: C, 70,75; H 8,98; P, 4,52.

Gefunden: C, 71,70; H, 9,15; P, 2,94.

Gelpermeationschromatographische Analyse: n = 2-12.

**Beispiel 5**

Poly-[hexamethylen-bis-(4-(3,5-di-tert.-butyl)-hydrocinnamat)-phosphonat]

Dieses Beispiel erläutert die Herstellung eines Copolymeren gemäss Beispiel 4 mit dieses Mal einem höheren Molekulargewicht. Man wiederholt die Arbeitsweise gemäss Beispiel 3 unter Verwendung von 63,90 g Hexamethylen-bis-(3,5-di-tert.-butyl-4-hydroxyhydrocinnamat), 4,30 g Natriumhydrid, 13,73 g Phosphortrichlorid, 3,60 g Wasser und 7,91 g Pyridin. Der Rückstand wird durch trockene Säulenchromatographie gereinigt, was ein weisses Pulver vom Schmelzpunkt 61-69° C ergibt. IR: (1% in Tetrachlorkohlenstoff) 2450 $cm^{-1}$ (P-H). Analyse: Berechnet für $[C_{40}H_{61}O_7P]_n$: C, 70,15; H, 8,98; P, 4,52.

Gefunden: 71,54; H, 8,82; P, 3,31.

**Beispiel 6**

Poly-[2,2-dimethyl-1,3-propandiyl-bis-(4-(3,5-di-tert.-butyl)-hydrocinnamat)-phosphonat]

Man wiederholt die Arbeitsweise gemäss Beispiel 3 unter Verwendung von 62,49 g 2,2-Dimethyl-1,3-propandiyl-bis-(3,5-di-tert.-butyl-4-hydroxyhydrocinnamat), 4,8 g Natriumhydrid, 13,73 g Phosphortrichlorid, 3,6 g Wasser und 7,91 g Pyridin. Der Rückstand wird durch trockene Säulenchromatographie gereinigt, was ein weisses Pulver vom Schmelzpunkt 70-80° C ergibt. IR: (1% in Tetrachlorkohlenstoff) 2450 $cm^{-1}$ (P-H).

Analyse: Berechnet für $[C_{39}H_{59}O_7P]_n$: C, 69,82; H, 8,86; P, 4,62.

Gefunden: C, 69,94; H, 9,20; P, 4,02.

**Beispiel 7**

Poly-[thiodiäthylen-bis-(4-(3,5-di-tert.-butyl)-hydrocinnamat)-phosphonat]

Man wiederholt die Arbeitsweise von Beispiel 3 unter Verwendung von 100 g Thiodiäthylen-bis-(3,5-di-tert.-butyl-4-hydroxyhydrocinnamat), 7,49 g Natriumhydrid, 21,42 g Phosphortrichlorid, 5,62 g Wasser und 15,80 g Triäthylamin an Stelle von Pyridin. Der Rückstand wird durch trockene Säulenchromatographie gereinigt, was ein weisses Pulver vom Schmelzpunkt 52-64° C ergibt. IR: (1%. in Tetrachlorkohlenstoff) 2450 $cm^{-1}$ (P-H).

Analyse: Berechnet für $[C_{38}H_{57}O_7PS]_n$: C, 66,25; H, 8,34; P, 4,50; S, 4,65.

Gefunden: C, 65,10; H, 8,11; P, 3,72; S, 4,90.

**Beispiel 8**

Unstabilisiertes Polypropylenpulver (Hercules Profax 6501®) wird mit der angegebenen Menge an Stabilisatoren gründlich durchgemischt. Die vermischten Materialien werden dann 5 Minuten bei 182° C auf einem Zweiwalzenstuhl gewalkt worauf man das stabilisierte Polypropylen als Folie abzieht und abkühlen lässt. Das gewalzte Polypropylen wird dann in Stücke geschnitten und in einer hydraulischen Presse bei 200° C und 12 bar zu 0,635 mm dicken Plättchen verpresst. Typische Proben werden dann in einer Fluoreszenzsonnenlicht/Schwarzlichtkammer belichtet und bei 150° C im Ofen gealtert, wobei jeweils die Zeit bis zum Versagen bestimmt wird. Versagen zeigt sich durch die erste Trübung und Verfärbung der belichteten Plättchen.

**Ofenalterung bei 150°C**

Additiv Antioxydans A Zeit bis zum
(Gew.-%) Versagen (Stunden)
Ohne - < 20
0,1% Polymer aus Beispiel 3 - 110
0,3% Polymer aus Beispiel 4 - 410
0,3% Polymer aus Beispiel 5 - 1030
0,3% Polymer aus Beispiel 5 0,1 1600
0,3% Polymer aus Beispiel 6 - 530
0,3% Polymer aus Beispiel 6 0,1 1440
0,2% Polymer aus Beispiel 7 - 890
0,3% Polymer aus Beispiel 7 - 1110
0,3% Polymer aus Beispiel 7 0,1 1520
0,1% Polymer aus Beispiel 7 - 1190
und 0,3% Distearyl-thiodipropionat
Antioxydans A = Pentaerythrit-tetrakis-[3-(3,5-di-t-butyl-4-hydroxyphenyl)-propionat]

**Fluoreszenzsonnenlicht/Schwarzlichtbelichtung**

Costabilisa- Zeit bis zum Ver
Additivtor B (%) sagen (Stunden)
Ohne 0,2 400
0,25% Polymer aus Beispiel 1 0,2 1080
0,25% Polymer aus Beispiel 3 0,2 1010
0,3% Polymer aus Beispiel 3 - 1000
0,25% Polymer aus Beispiel 4 0,2 450
0,25% Polymer aus Beispiel 5 0,2 600
0,2% Polymer aus Beispiel 7 - 400
0,3% Polymer aus Beispiel 7 - 1100
Costabilisator B = 0,O-Di-n-octadecyl-3,5-di-tert.-butyl-4-hydroxy-benzylphosphonat.

**Beispiel 9**

Polypropylen (Hercules Profax 6501®) mit 0,1 Gew.-% Calciumstearat aber ohne Antioxydans wird mit der angegebenen Konzentration an Stabilisatoren vermischt. Die Gemische werden granuliert und bei 232°C unter Verwendung einer 10,16 cm breiten Schlitzdüse als 0,127 mm dickes Band extrudiert. Das Band wird in 6,4 mm breite Streifen geschnitten, die man dann über Zugwalzen bei einer Temperatur von 107°C im Verhältnis 6:1 zu verstrecktem, 0,0508 mm dickem Folienband verstreckt.

Die Bänder werden dann im Kohlelichtbogen-Weatherometer (mit Brause) dem Licht ausgesetzt. Nach der Belichtung bestimmt man die Zugfestigkeitseigenschaften der Proben mit einem Instron-Zugfestigkeitsprüfapparat. Die zu einer 50%igen Verminderung der Zugfestigkeit erforderliche Anzahl Stunden im Kohlelichtbogen-Weatherometer wird als die Versagenszeit angesehen.

Entsprechend werden Probebänder bei 125°C im Ofen gealtert. Die Versagenszeit wird jeweils auf Grundlage des ersten Auftretens von Trübung und Verfärbung bestimmt.

Kohlelichtbogen- Ofenalterung
Additiv Weatherometer (Stunden) (Stunden)
0,1% Polymer aus Beispiel 1 387 24
0 1% Polymer aus Beispiel 2 931 237
0 1% Polymer aus Beispiel 3 754 238
0 1% Polymer aus Beispiel 4 375 591
0,1% Polymer aus Beispiel 6 736 264
Diese Ergebnisse legen den wirksamen Wärme- und Lichtschutz durch die vorliegenden Stabilisatoren dar.

**Beispiel 10**

PVC-Harz (Geon 85862 ® von B.F. Goodrich - natürliches Pulver), das einen Butylzinnmercaptid-Hitzestabilisator aber kein $TiO_2$ enthält, wird mit 5 Teilen einer Rutilqualität $TiO_2$ auf 100 Teile Harz vermischt. Diese Formulierung wird als Kontrolle (A) bezeichnet. Dann setzt man einer Probe (A) 1 Teil Polymer aus

Beispiel 3 auf 100 Teile zu, was Formulierung (B) ergibt. Die beiden Formulierungen werden bei 170°C im Zweiwalzenstuhl gewalkt, und 0,0508 mm dicke Prüfplättchen werden daraus durch Verpressen hergestellt und durch 2000 Stunden Schnellalterung in einem Xenon-Weatherometer geprüft. Die Gelbwertfarbe der Plättchen aus (A) und (B) wird gemäss ASTM D-1925-63T bestimmt. Die Ergebnisse sind in der nachfolgenden Tabelle angeführt.

Gelbwert
Formulierung Zu Anfang 2000 Stunden
A (Kontrolle) 5,3 18,6
B 5,1 9,5

Diese Ergebnisse demonstrieren klar die Wirksamkeit der erfindungsgemäßen Stabilisatoren bei der Verminderung des Oxydationsabbaus.

Zusammenfassend ist es ersichtlich, dass diese Erfindung neue polymere Phosphonate zur Verfügung stellt, welche besonders wirksam den durch Hitze, Licht und Luft verursachten Abbaueffekten entgegenwirken.

**Patentansprüche**

1. Polymere Phosphonate mit wiederkehrenden Struktureinheiten der Formel

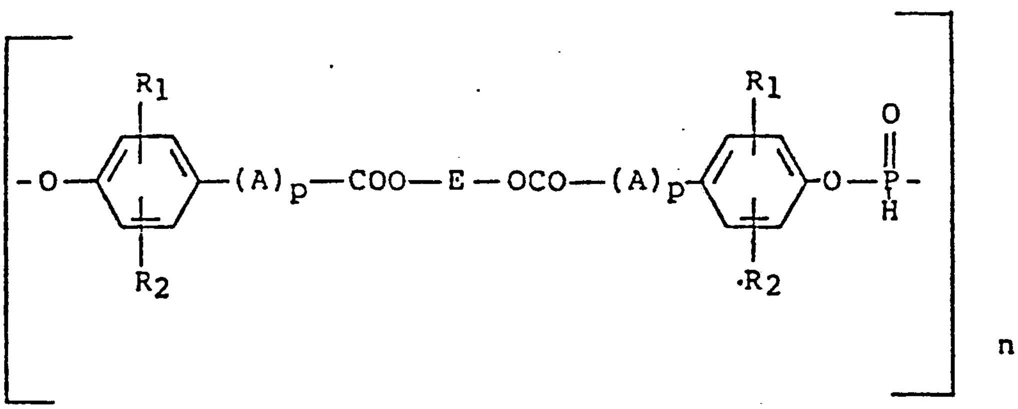

worin $R_1$ und $R_2$ unabhängig voneinander Alkyl mit 4 bis 12 Kohlenstoffatomen, Cycloalkyl mit 5 bis 6 Kohlenstoffatomen, Aralkyl mit 7 bis 15 Kohlenstoffatomen oder Alkaryl mit 7 bis 15 Kohlenstoffatomen, A Alkylen mit 1 bis 4 Kohlenstoffatomen, E Alkylen mit 2 bis 12 Kohlenstoffatomen, gegebenenfalls durch eine oder zwei Alkylgruppen mit 1 bis 9 Kohlenstoffatomen substituiertes Phenylen, eine Gruppe $-T(OT)_t-$, in der T für Aethylen, Propylen oder 1,4-Butylen steht und t 1 bis 10 ist, oder eine Gruppe -G-X-G-, in der G für Alkylen mit 2 bis 4 Kohlenstoffatomen und X für Schwefel oder -N(R)- stehen, wobei R Wasserstoff oder Alkyl mit 1 bis 8 Kohlenstoffatomen darstellt, bedeuten, und p 0 oder 1 sowie n 2 bis 50 sind.

2. Polymere nach Anspruch 1, dadurch gekennzeichnet, dass sich $R_1$ und $R_2$ im Phenylring jeweils in meta-Stellung zur A-Gruppe befinden.

3. Polymere nach Anspruch 1, dadurch gekennzeichnet, dass als $R_1$ und $R_2$ tert.-Butyl vorliegt.

4. Polymere nach Anspruch 1, dadurch gekennzeichnet, dass p O ist oder A Aethylen darstellt.

5. Polymere nach Anspruch 1, dadurch gekennzeichnet, dass als E Hexamethylen, Thiodiäthylen, 2,2-Dimethyl-1 3-propandiyl oder $-T(OT)_t$ vorliegt, wobei T für Aethylen steht und t 1 bis 10 ist.

6. Stoffzusammensetzungen, bestehend aus organischem Material, das oxydativem, thermischem und aktinischem Abbau unterliegt und mit einer wirksamen stabilisierenden Menge eines Polymeren nach Anspruch 1 stabilisiert ist.

7. Stoffzusammensetzungen, bestehend aus organischem material, das oxydativem, thermischem und aktinischem Abbau unterliegt und mit einer wirksamen stabilisierenden Menge eines Polymeren nach Anspruch 1 stabilisiert ist, und üblichen Zusatzstoffen.

8. Zusammensetzungen nach Anspruch 6 und Anspruch 7, dadurch gekennzeichnet, dass als organisches Material ein synthetisches Polymer vorliegt.

9. Zusammensetzungen nach Anspruch 8, dadurch gekennzeichnet, dass als solches synthetisches Polymer ein Polyolefinhomopolymer oder -copolymer vorliegt.

10. Zusammensetzungen nach Anspruch 8, dadurch gekennzeichnet, dass als solches synthetisches Polymer Polyvinylchlorid vorliegt.

11. Zusammensetzungen nach Anspruch 7, dadurch gekennzeichnet, dass sie ein aus der 2,6-Di-tert.-butyl-4-methylphenol, 4,4'-Thio-bis-(6-tert.-butyl-3-methylphenol), 4,4'-Methylen-bis-(6-tert.-butyl-4-methylphenol), 4,4'-Methylen-bis-(2,6-di-tert.-butylphenol), 1,1,3-Tris-(5-tert.-butyl-4-hydroxy-2-methylphenyl)-butan, 1,3,5-Tris-(3,5-di-tert.-butyl-4-hydroxybenzyl)-2,4,6-trimethylbenzol, 2-Octylthio-4,6-bis-(3,5-di-tert.-butyl-4-hydroxyanilino)-s-triazin, n-Octadecyl-3,5-di-tert.-butyl-4-hydroxyhydrocinnamat, Neo-pentantetrayl-tetrakis-(3,5-di-tert.-butyl-4-hydroxyhydro-cinnamat), 1,3,5-Tris-(3,5-di-tert.-butyl-4-hydroxybenzyl)-isocyanurat, Thiodiäthylen-bis-(3,5-di-tert.-butyl-4-hydroxy-hydrocinnamat), den Tris-(2-hydroxyäthyl)-isocyanuratester der β-(3,5-Di-tert.-butyl-4-hydroxyphenyl)-propionsäure, 6,6'-Aethyliden-bis-(2,4-di-tert.-butylphenol), 6,6'-Methylen-bis-(2,4-di-tert.-butylphenol) und 1,3,5-Tris-(4-tert.-butyl-3-hydroxy-2,6-dimethylbenzyl)-isocyanurat umfassenden Gruppe ausgewähltes phenolisches Antioxydans enthalten.

## Claims

1. A polymeric phosphonate containing repeating structural units of the formula

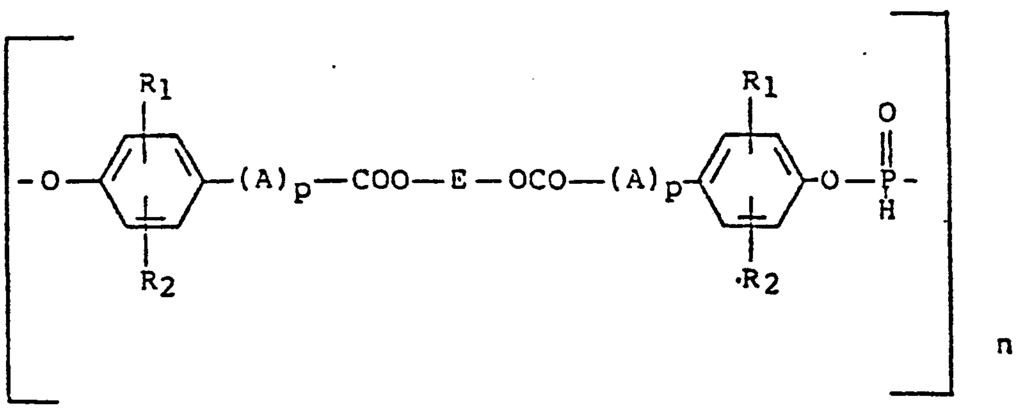

wherein each of $R_1$ and $R_2$ independently of the other is alkyl of 4 to 12 carbon atoms, cycloalkyl of 5 to 6 carbon atoms, or aralkyl of 7 to 15 carbon atoms, or alkaryl of 7 to 15 carbon atoms, A is alkylene of 1 to 4 carbon atoms, E is alkylene of 2 to 12 carbon atoms, phenylene, phenylene substituted by one or two alkyl groups of 1 to 9 carbon atoms, or is the group $-T(OT)_t-$,in which T is ethylene, propylene or 1,4-butylene, and t is 1 to 10, or E is the group -G-X-G-, in which G is alkylene of 2 to 4 carbon atoms, and X is sulfur or -N(R)-, in which R is hydrogen or alkyl of 1 to 8 carbon atoms, and p is 0 or 1,and n is 2 to 50.

2. A polymer according to claim 1, wherein $R_1$ and $R_2$ are in the meta-position of each phenyl ring relative to the A group.

3. A polymer according to claim 1 wherein $R_1$ and $R_2$ are tert-butyl.

4. A polymer according to claim 1, wherein p is 0 or A is ethylene.

5. A polymer according to claim 1, wherein E is hexamethylene, thiodiethylene, 2,2-dimethyl-1,3-propanediyl or $-T(OT)_t-$, in which T is ethylene and t is 1 to 10.

6. A composition comprising an organic material subject to oxidative, thermal and actinic degradation and stabilized with an effective stabilizing amount of a polymer according to claim 1.

7. A composition comprising an organic material subject to oxidative, thermal and actinic degradation and stabilized with an effective stabilizing amount of a polymer according to claim 1, together with customary adjuvants.

8. A composition according to either of claims 6 or 7, wherein the organic material is a synthetic polymer.

9. A composition according to claim 8, wherein said synthetic polymer is a polyolefin homopolymer or copolymer.

10. A composition according to claim 8, wherein said synthetic polymer is polyvinyl chloride.

11. A composition according to claim 7, which contains a phenolic antioxidant selected from the group consisting of 2,6-di-tert-butyl-4-methylphenol, 4,4'-thiobis(6-tert-butyl-3-methylphenol), 4,4'-methylenebis(6-tert-butyl-4-methylphenol), 4,4'-methylenebis(2,6-di-tert-butylphenol), 1,1,3-tris(5-tert-butyl-4-hydroxy-2-methylphenyl)butane, 1,3,5-tris(3,5-di-tert-butyl-4-hydroxybenzyl)-2,4,6-trimethylbenzene, 2-octylthio-4,6-bis(3,5-di-tert-butyl-4-hydroxyanilino)-s-triazine, n-octadecyl 3,5-di-tert-butyl-4-hydroxyhydrocinnamate, neopentanetetrayl tetrakis(3,5-di-tert-butyl-4-hydroxyhydrocinnamate), 1,3,5-tris(3,5-di-tert-butyl-4-hydroxybenzyl)isocyanurate, thiodiethylene bis(3,5-di-tert-butyl-4-hydroxy-hydrocinnamate), tris-(2-hydroxyethyl) isocyanurate ester of β-(3,5-di-tert-butyl-4-hydroxyphenyl)-propionic acid, 6,6'-ethylidenebis(2,4-di-tert-butylphenol), 6,6'-methylenebis(2,4-di-tert-butylphenol) and 1,3,5-tris-(4-tert-butyl-3-hydroxy-2,6-dimethylbenzyl)isocyanurate.

## Revendications

1. Phosphonates polymères renfermant des unités structurales répétées répondant à la formule suivante

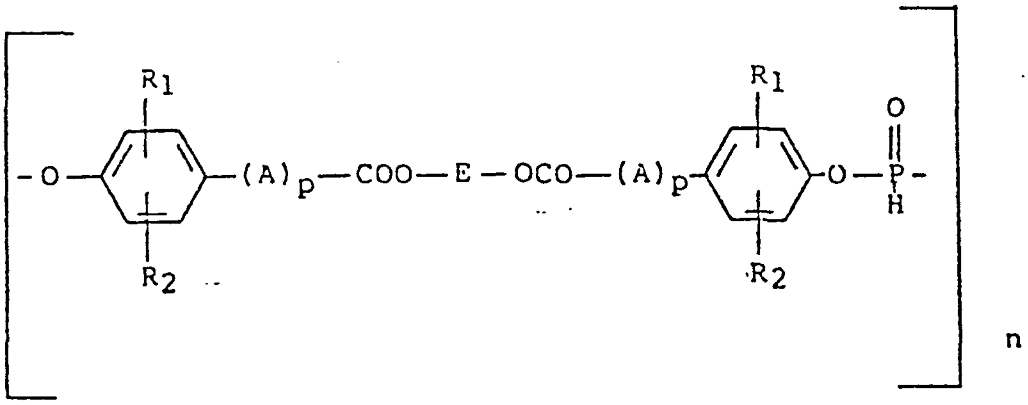

dans laquelle

$R_1$ et $R_2$ représentent chacun, indépendamment l'un de l'autre, un alkyle contenant de 4 à 12 atomes de carbone, un cylo-alkyle contenant 5 ou 6 atomes de carbone, un aralkyle contenant de 7 à 15 atomes da carbone ou un alkylaryle contenant de 7 à 15 atomes de carbone,

A représente un alkylène contenant da 1 à 4 atomes da carbone,

E représente un alkylène contenant de 2 à 12 atomes de carbone, un phenylène éventuellement porteur d'un ou de deux radicaux alkyles en $C_1$-$C_9$, un radical $-T(OT)_t-$ dans lequel T représente un ethylène, un propylène ou un butylène-1,4 et t un nombre de 1 à 10, ou un radical -G-X-G- dans laquel G représente un alkylène contenant de 2 à 4 atomes de carbone et X la soufre ou un radical -N(R)- dont le symbole R désigne 1 hydrogène ou un alkyle contenant de 1 à 8 atomes de carbone,

p est égal à 0 ou à 1 et

n représente un nombre de 2 à 50.

2.- Polymères selon la revendication 1 caractérisés en ce que $R_1$ et $R_2$ se trouvent chacun, sur le noyau phényle correspondant, en une position méta par rapport au radical A.

3 - Polymères selon la revendication 1 caractérisés en ce que $R_1$ et $R_2$ sont chacun un radical tert-butyle.

4.- Polymères selon la revendication 1 caractérisés en ce que p est égal à O ou en ce que A représente un radical éthylène.

5.- Polymères selon la revendication 1, caractérisés en ce que E représente un radical hexaméthylène, thiodiéthylène ou diméthyl-2,2 propane-diyle-1,3 ou un radical $-T(OT)_t$ dans lequel T représente un radical éthylène et t un nombre de 1 à 10.

6.- Compositions constituées d'une matière organique susceptible de subir une dégradation sous l'effet de l'oxydation, de la chaleur ou de la lumière, compositions qui sont stabilisées par une quantité efficace, du point de vue de la stabilisation, d'un polymère selon la revendication 1.

7.- Compositions constituées d'une matière organique susceptible de subir une dégradation sous l'effet de l'oxydation, de la chaleur ou de la lumière, compositions qui sont stabilisées par une quantité efficace, du point de vue de la stabilisation, d'un polymère selon la revendication 1, et d'additifs usuels.

8.- Compositions selon l'une des revendications 6 et 7, caractérisées en ce que la matière organique est un polymère synthétique.

9.- Compositions selon la revendication 8, caractérisées en ce que le polymère synthétique est un homopolymère ou un copolymère d'oléfine(s).

10.- Compositions selon la revendication 8, caractérisées en ce que le polymère synthétique est du poly-(chlorure de vinyle).

11. - Compositions selon la revendication 7, caractérisées en ce qu'elles contiennent un anti-oxydant phénolique pris dans l'ensemble constitué par le di-tert-butyl-2,6 méthyl-4 phénol, le thio-4,4' bis-(méthyl-3 tert-butyl-6 phénol), le méthylène-4,4' bis-(méthyl-4 tert-butyl-6 phénol), le méthylène-4 4' bis-(di-tert-butyl-2,6 phénol), le tris-(méthyl-2 hydroxy-4 tert-butyl-5 phényl)-1,1,3 butane, le tris-(di-tert-butyl-3,5 hydroxy-4 benzyl)-1,3,5 triméthyl-2,4,6 benzène, l'octylthio-2 bis-(di-tert-butyl-3,5 hydroxy-4 anilino)-4,6 triazine-1,3,5, le di-tert-butyl-3,5 hydroxy-4 hydrocinnamate de n-octadécyle, le tétrakis-(di-tert-butyl-3,5 hydroxy-4 hydrocinnamate) de néopentane-tétrayle, l'isocyanurate de tris-(di-tert-butyl-3,5 hydroxy-4 benzyle), le bis-(di-tert-butyl-3,5 hydroxy-4 hydrocinnamate) de thio-diéthylène, l'ester formé par l'isocyanurate de tris-(hydroxy-2 éthyle) et l'acide (di-tert-butyl-3,5 hydroxy-4 phényl)-3 propionique, l'éthylidène-6,6' bis-(di-tert-butyl-2,4 phénol), le méthylène-6,6' bis-(di-tert-butyl-2,4 phénol) et l'isocyanurate de tris-(hydroxy-3 tert-butyl-4 diméthyl-2,6 benzyle).